(19) Europäisches Patentamt
European Patent Office
Office européen des brevets

(11) **EP 0 933 119 A1**

## (12) DEMANDE DE BREVET EUROPEEN

(43) Date de publication:
04.08.1999 Bulletin 1999/31

(51) Int. Cl.⁶: **B01D 53/50**, B01D 53/68, B01D 53/40

(21) Numéro de dépôt: 98200202.4

(22) Date de dépôt: 26.01.1998

(84) Etats contractants désignés:
AT BE CH DE DK ES FI FR GB GR IE IT LI LU MC NL PT SE
Etats d'extension désignés:
AL LT LV MK RO SI

(71) Demandeur:
Carmeuse Coordination Center S.A.
1348 Louvain-la-Neuve (BE)

(72) Inventeurs:
• Hubert, Paul
4121 Neupré (BE)

• Bartiaux, Stéphane
7034 Obourg (BE)
• Poncelet, Georges
1030 Bruxelles (BE)
• Bultreys, Michael
7500 Tournai (BE)

(74) Mandataire:
Bairiot-Delcoux, Mariette et al
Office Kirkpatrick S.A.,
Avenue Wolfers, 32
1310 La Hulpe (BE)

### (54) Agent, procédé et dispositif de traitement de gaz

(57) L'invention concerne un agent de captation pour le traitement de gaz, ayant une phase active qui consiste en substance en un silicate de calcium hydraté, présent sous forme d'une phase prétobermoritique, et un procédé de traitement de gaz au moyen d'un tel agent de captation.

Ce procédé peut être un procédé sec, dans lequel les gaz sont mis en contact direct avec l'agent de captation. Les gaz à traiter peuvent passer à travers au moins un lit fixe contenant l'agent de captation.

L'invention concerne encore un dispositif pour le traitement de gaz, comportant un ou plusieurs lits fixes contenant un agent de captation suivant l'invention.

EP 0 933 119 A1

**Description**

La présente invention concerne un agent de captation solide utilisable dans le traitement de gaz, notamment de gaz de fumées. La présente invention concerne également un procédé de traitement de gaz au moyen dudit agent de captation.

On comprend par "traitement de gaz" un procédé d'élimination de composés acides présents dans le gaz. Les composés acides qu'on cherche à éliminer des gaz sont plus particulièrement: $SO_2$, $SO_3$, HCl, HBr et HF.

De nombreux procédés industriels émettent comme produits secondaires non désirés des gaz contenant un ou plusieurs des composés acides susmentionnés. Il est souhaitable d'éviter au maximum que ces composés acides soient libérés dans l'atmosphère, ces composés étant généralement perçus comme étant nuisibles, et au moins certains de ces composés participant à la formation de pluies acides.

Des efforts considérables ont déjà été consentis pour le développement et l'amélioration de procédés de traitement de gaz.

Parmi les procédés de traitement connus, plusieurs font appel à un agent solide, dit agent de captation. On utilise notamment des agents de captation à base de calcium. Afin qu'il capte les composés acides présents dans les gaz, cet agent est mis en contact avec les gaz à purifier, soit sous forme de poudre ou de particules soit en suspension liquide.

Dans un premier type de procédé de traitement, dit procédé humide, les gaz sont lavés dans un absorbeur à l'aide d'une suspension aqueuse d'un agent de captation. Les composés acides captés sont récupérés dans la suspension à la sortie de l'absorbeur sous forme de produits de réaction, combinés avec l'agent de captation. Par exemple, le $SO_2$ et le $SO_3$ captés sont récupérés dans cette suspension sous forme de sulfites et/ou sulfates.

Suivant un deuxième type de procédé de traitement, dit procédé semi-humide, la suspension aqueuse d'un agent de captation est injectée dans l'absorbeur sous forme de gouttelettes. Le débit de la suspension, la concentration d'agent de captation dans ladite suspension et la température des gaz à traiter sont tels que l'eau présente dans la suspension est évaporée et entraînée par les gaz. Les composés acides captés sont récupérés sous forme de produits de réaction dans des résidus solides.

Dans un troisième type de procédé de traitement, dit procédé sec, les gaz sont mis en contact direct avec un agent de captation solide, soit par injection sèche dudit agent dans l'absorbeur ou dans un lit entraîné, soit par maintien de l'agent dans un lit fluidisé. Il est également possible de faire passer les gaz à travers un lit fixe d'un agent de captation. Les composés captés sont présents sous forme de produits de réaction dans le résidu solide.

Traditionnellement, on utilise, comme agents de captation solides, des composés contenant du calcium sous une forme susceptible de réagir avec les composés acides.

Parmi les composés acides susmentionnés, le $SO_2$ est généralement le plus difficile à capter par réaction chimique à cause de sa moindre acidité. Ainsi, un agent de captation basique qui capte efficacement le $SO_2$ capte a fortiori les composés plus acides tels que HCl, HBr, HF et $SO_3$.

Par conséquent, les agents de captation peuvent être évalués par leur capacité de capter le $SO_2$ étant entendu qu'ils captent également les autres composés acides susmentionnés. Cette approche est également adoptée dans la présente description.

Un premier exemple d'un agent de captation solide connu est le $Ca(OH)_2$ ou hydroxyde de calcium.

La réaction entre le $Ca(OH)_2$ et le $SO_2$ présent dans les gaz nécessite une humidité élevée, telle que celle rencontrée, par exemple, dans des procédés humides ou dans des procédés semihumides.

Afin d'arriver à une captation de $SO_2$ acceptable lors de la mise en oeuvre d'un procédé dit sec, il est généralement admis que l'injection d'eau soit dans les gaz soit avec le $Ca(OH)_2$ améliore les performances du procédé.

Un désavantage important du $Ca(OH)_2$ est sa consistance pâteuse et/ou collante à humidité relative élevée en particulier quand les gaz à traiter contiennent du HCl, ce qui est fréquemment le cas. Ceci entraîne la formation de dépôts solides dans les installations et le risque de colmatage de celles-ci ou l'obligation de traiter les gaz à basse humidité relative et donc à des conditions non-optimales de traitement de gaz. Dans le cas d'un lit fixe de $Ca(OH)_2$, cette consistance pâteuse entraîne que le lit perd progressivement sa porosité et/ou son intégrité, lesquelles sont essentielles à l'efficacité du procédé de traitement.

Un autre désavantage du $Ca(OH)_2$ utilisé en procédé sec est son manque de sélectivité (captation importante de $CO_2$) et sa réactivité limitée vis-à-vis du $SO_2$. On a en effet constaté que durant le traitement de gaz, la réactivité d'un agent à base de $Ca(OH)_2$ présent sous forme de granules descend jusqu'à un niveau très bas et par conséquent inintéressant bien que ledit agent contienne toujours une quantité significative de $Ca(OH)_2$ qui n'a pas réagi avec les composés du gaz.

On a ainsi constaté expérimentalement que dans des conditions avantageuses de traitement en utilisant un $Ca(OH)_2$ à grande surface spécifique (56 $m^2$/g mesuré par la méthode BET) et à grand volume poreux (0,27 $cm^3$/g mesuré par la méthode BJH dans l'hypothèse de pores cylindriques, un volume poreux de 0,135 $cm^3$/g correspondant à des pores ayant un diamètre compris entre 100 et 400 Å) avec un gaz traité à 65°C et 66% d'humidité relative, le résidu saturé du $Ca(OH)_2$ contenait moins de 10% en masse de soufre. Moins d'un atome de calcium sur trois avait réagi avec du $SO_2$, une quantité presqu' équivalente ayant réagi avec du $CO_2$ présent dans le gaz.

En pratique, on constate donc que le $Ca(OH)_2$ doit être utilisé en un excès important pour le traitement de gaz, ce qui entraîne en outre une quantité élevée de déchets à mettre en décharge.

D'autres agents de captation solides connus sont les silicates de calcium hydratés de formule $(CaO)_x(SiO_2)_y$ $(H_2O)_z$ contenant une quantité variable d'eau libre.

Dans DE-OS-36 11 769, il est proposé d'utiliser comme agent de captation un granulat de silicate de calcium hydraté riche en chaux, tel qu'issu du procédé de fabrication de béton, cet agent ayant de préférence une porosité élevée.

Dans le procédé semi-humide décrit dans US 4,804,521, on utilise comme agent de captation un silicate de calcium hydraté ou un aluminate de calcium hydraté, préparé par réaction d'une suspension aqueuse contenant un composé calcique alcalin ($CaO$ ou $Ca(OH)_2$) avec une silice ou une alumine.

Suivant le procédé sec décrit dans US 5,100,643, on injecte dans le gaz une poudre fluide semi-sèche contenant un tel silicate de calcium.

Un procédé de préparation d'une telle poudre semisèche est décrit dans US-5,401,481.

Avec les agents de captation connus à base de silicates de calcium hydratés, on observe que les résidus de ces agents après réaction peuvent contenir une fraction significative de calcium qui n'a pas réagi durant le traitement des gaz, de manière telle qu'on a généralement besoin d'un excès d'agent de captation, ce qui entraîne à nouveau un excès de déchets solides.

Afin de remédier à ce problème, il est proposé dans US 4,804,521, US 5,100,643 et US 5,401,481 de recycler, au moins partiellement, les résidus solides du procédé de traitement, résidus qui peuvent encore comprendre des cendres volantes contenant de la silice. Ainsi ces résidus solides sont ajoutés à la suspension aqueuse dans laquelle le silicate de calcium hydraté est préparé.

Un but de la présente invention est de remédier aux désavantages des agents de captation connus contenant du calcium.

Un autre but de l'invention est de réaliser un procédé de traitement efficace au moyen d'un agent de captation solide, qui produise un minimum de déchets solides.

La présente invention a pour objet un agent de captation ayant une phase active contenant du silicate de calcium hydraté. Cette phase active consiste plus particulièrement en substance en une phase prétobermoritique.

On connaît un grand nombre de silicates de calcium hydratés de différentes compositions et structures cristallines. Une étude détaillée de différents silicates de calcium hydratés, de leurs structures et de leurs procédés de préparation se trouve dans le chapitre 5 "The Calcium Silicate Hydrates" de l'ouvrage "The CHEMISTRY of CEMENTS" édité par H.F.W. Taylor et publié par Academic Press en 1964.

Parmi les silicates de calcium hydratés, on trouve des composés cristallins tels que notamment la tobermorite, la xonotlite, la foshagite, l'afwillite, la hillebrandite, et des composés mal ou peu cristallisés, tels que notamment le CSH(I) et le CSH(II).

Dans le cadre de la présente invention, on entend par phase prétobermoritique, une phase constituée d'un "tobermorite gel", la phase prétobermoritique contenant optionnellement également une quantité de $Ca(OH)_2$ présent en tant que tel.

De telles phases prétobermoritiques sont décrites dans le chapitre 7.II de "The Chemistry of Cements" comme intermédiaires dans l'hydratation de silicate tricalcique ou de β-silicate dicalcique à basse température. La nature du "tobermorite gel" est décrite avec plus de détail dans le chapitre 5.IV.D dudit ouvrage (pages 199 et 200).

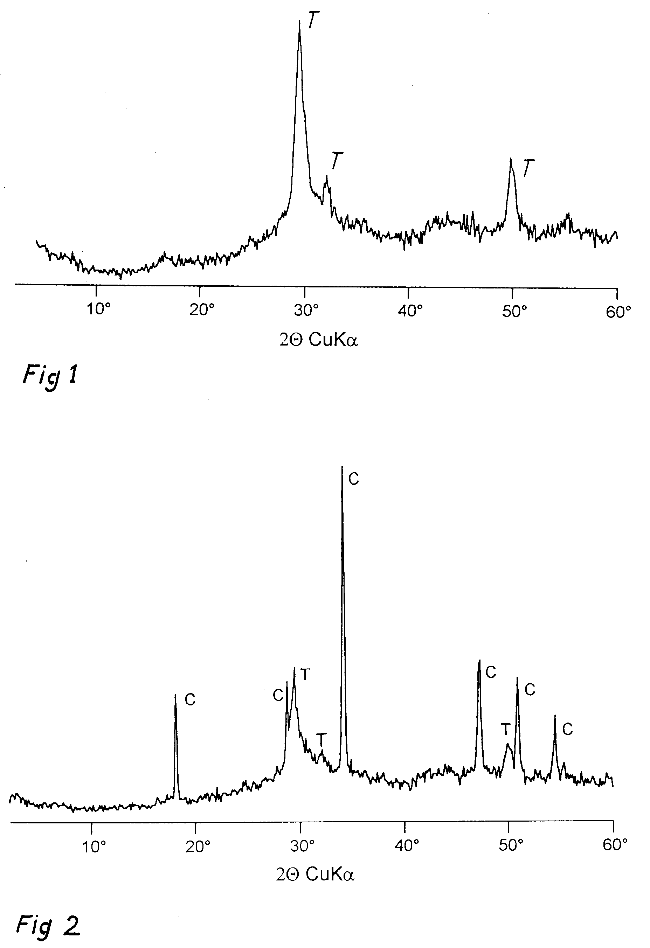

La représentation d'un spectre de diffraction X typique du "tobermorite gel" tel que défini ci-dessus est donnée à la figure 1. Ce spectre correspond à celui donné par Taylor, dans l'ouvrage mentionné ci-dessus, à la page 183 figure 9.

La figure 2 représente un spectre de diffraction X typique d'une phase prétobermoritique contenant du $Ca(OH)_2$ en tant que tel.

Dans les figures 1 et 2, les pics qui correspondent au "tobermorite gel" sont indiqués par T, ceux qui correspondent au $Ca(OH)_2$ sont indiquées par C.

La phase prétobermoritique de l'agent de captation suivant l'invention peut présenter un rapport molaire $0,2 \leq Si/Ca \leq 1$, ou compris entre 0,2 et 0,65 ou encore entre 0,4 et 0,65.

Il est à noter que dans ce rapport molaire, la quantité de calcium dans la phase prétobermoritique consiste d'une part en calcium présent dans le "tobermorite gel" et d'autre part en calcium présent sous forme de $Ca(OH)_2$ en tant que tel (voir chapitre 7.II A de "The Chemistry of Cements").

Pour éviter toute confusion, l'attention du lecteur est attirée sur le fait que, en général, les rapports molaires $CaO/SiO_2$ cités dans le chapitre 7.II de "The Chemistry of Cement" correspondent aux rapports molaires dans le "tobermorite gel" uniquement.

Dans la phase prétobermoritique de l'agent de captation suivant l'invention, le rapport molaire $H_2O/Ca$ peut se

situer entre 0,1 et 2, entre 0,1 et 1 ou encore entre 0,25 et 1, $H_2O$ étant l'eau restant dans un échantillon de la phase prétobermoritique après séchage à l'étuve à 105°C, jusqu'à atteindre un poids constant.

En pratique, la phase prétobermoritique contient également de l'eau absorbée sous différentes formes.

La quantité d'eau présente dans l'agent de captation peut en outre varier durant le traitement des gaz. On peut éventuellement injecter de l'eau sur l'agent de captation avant ou pendant son utilisation.

Pour la mise en oeuvre de certains procédés de traitement, par exemple le traitement en lit fixe, l'agent de captation est avantageusement présent sous forme de granules.

Suivant une forme d'exécution préférée, lesdits granules ont en substance un diamètre qui se situe entre 0,5 et 30 mm, de préférence entre 1 et 16 mm ou encore entre 1 et 8 mm.

Il est envisageable d'utiliser comme agent de captation un support couvert de la phase active ou imprégné par celle-ci. Le support est de préférence poreux. Il peut être inerte mais peut également avoir une activité dans le traitement des gaz.

Suivant une forme d'exécution préférée de l'invention, l'agent de captation consiste cependant en substance en la phase active, c'est-à-dire en la phase prétobermoritique telle que définie plus haut.

Dans ce cas, l'agent peut se présenter sous forme d'un ensemble de granules, ou d'agglomérats.

L'invention a également comme objet un procédé de traitement de gaz au moyen de l'agent suivant l'invention, c'est-à-dire un agent de captation dont la phase active consiste en substance en un silicate de calcium hydraté présent sous forme d'une phase prétobermoritique. Comme mentionné ci-dessus, ladite phase prétobermoritique peut comprendre du $Ca(OH)_2$ en tant que tel.

Le procédé suivant l'invention peut être un procédé humide ou un procédé semi-humide, dans lequel l'agent de captation est injecté dans les gaz à traiter sous forme d'une suspension aqueuse.

Le procédé peut également être un procédé sec, dans lequel les gaz à traiter sont mis en contact direct avec l'agent de captation de l'invention.

En particulier, le procédé suivant l'invention peut être un procédé sec dans lequel les gaz sont mis en contact avec l'agent de captation dans un lit fluidisé ou dans un lit entraîné de ce dernier.

Suivant une forme d'exécution spécifique de l'invention, le procédé est un procédé sec dans lequel on fait passer les gaz à traiter à travers au moins un lit fixe contenant l'agent de captation suivant l'invention. Dans ce cas, cet agent de captation est de préférence présent sous forme de granules ou d'agglomérats, tels que par exemple décrits ci-dessus.

Dans toutes les formes d'exécution du procédé, il est particulièrement avantageux d'utiliser l'agent de captation suivant l'invention qui consiste, en substance, en une phase prétobermoritique.

Afin de promouvoir la réaction entre l'agent de captation et les composés acides présents dans les gaz, la température des gaz à traiter se situe entre 40°C et 450°C.

De préférence, la température des gaz à l'entrée du lit est entre 60 et 300°C, 60 et 150°C ou encore entre 65 et 85°C. Egalement de préférence, l'humidité relative des gaz à l'entrée du lit est entre 3 et 100 %, ou encore entre 30 et 100%.

On peut suivre l'efficacité du lit fixe en détectant la présence de composés acides dans les gaz sortant de ce lit fixe. Il est indiqué de mesurer la concentration d'au moins un composé acide, dit "composé indicateur", dans les gaz à la sortie du lit fixe.

Quand la concentration en composé indicateur dans les gaz à la sortie du lit fixe dépasse une valeur limite fixée, il est indiqué de remplacer l'agent de captation usé par une nouvelle charge (batch) d'agent *de* captation. Vu que le $SO_2$ est le composé acide le plus difficile à capter, il est indiqué de tester l'efficacité du lit en mesurant la concentration en $SO_2$ dans les gaz à la sortie du lit.

Il existe un grand nombre de systèmes pour la détection de $SO_2$ dans les gaz qui peuvent être utilisés dans le présent procédé.

La valeur limite pour la concentration de $SO_2$ dans les gaz à la sortie du lit fixe peut varier, en particulier selon les restrictions légales pour les effluents gazeux.

Pour assurer le fonctionnement en continu du procédé, on peut prévoir entre autres applications par exemple deux lits fixes en parallèle. On fait passer les gaz à traiter à travers un des deux lits fixes jusqu'au moment où la concentration en composé indicateur atteint la valeur limite. Puis, on dirige les gaz à traiter vers le deuxième lit fixe et on remplace l'agent de captation usé du premier lit. Quand la concentration en composé indicateur à la sortie du deuxième lit atteint la valeur limite, on dirige à nouveau les gaz à traiter vers le premier lit fixe et on remplace l'agent de captation usé du deuxième lit fixe, et ainsi de suite.

On peut également envisager un procédé de traitement avec une installation comportant deux lits fixes en série. Quand la teneur en composé indicateur de l'effluent du lit en aval est trop élevée, l'agent de captation du lit fixe en amont est évacué. L'agent de captation du lit fixe en aval est déplacé vers le lit fixe en amont et le lit fixe en aval est rempli d'une charge (batch) d'agent de captation frais.

Suivant une forme d'exécution préférée, l'installation de traitement est un système série-parallèle dans lequel chaque système en parallèle comporte deux lits fixes en série tels que décrit ci-dessus. Dans un premier stade, les gaz à traiter sont dirigés vers les deux lits en série du premier système en parallèle.

Quand la concentration en composé indicateur dans les gaz à la sortie du lit fixe en aval dépasse la valeur limite, les gaz à traiter sont dirigés vers les deux lits fixes en série du deuxième système en parallèle. Ainsi, le traitement des gaz continue pendant que les lits fixes du premier système en parallèle sont remplacés, par exemple de la façon décrite cidessus.

L'invention a également pour objet un dispositif pour le traitement de gaz au moyen de l'agent de captation suivant l'invention. Ledit dispositif comporte un ou plusieurs lits fixes contenant l'agent de captation. Le dispositif est en outre apte à être inséré dans un passage de gaz à traiter, de manière à forcer les gaz à passer à travers ledit lit fixe ou à travers au moins un des lits fixes.

De préférence, le dispositif comporte également un système de détection apte à détecter la présence d'un ou plusieurs des composés acides $SO_2$, $SO_3$, HCl, HBr et HF dans des gaz. Ce système de détection est incorporé dans le dispositif de manière à ce qu'il détecte la présence de ce ou ces composés acides dans les gaz après leur passage à travers le ou les lits fixes.

Un tel dispositif peut avantageusement être utilisé, par exemple, pour le traitement de gaz provenant de chauffages individuels ou d'ensembles tels que des hôpitaux ou des écoles.

A titre d'exemple, il est décrit ci-dessous un procédé de préparation d'un agent de captation suivant l'invention.

On prépare une suspension agitée aqueuse de silice, par exemple amorphe, ayant 40% de matière sèche à une température de 25°C. On ajoute à cette suspension de la chaux vive moulue dont les particules ont en substance un diamètre < 100 μm. On dilue la suspension avec de l'eau jusqu'à ce qu'elle ne contienne pas plus que 30% de matière sèche. Après 15 minutes d'homogénéisation, au cours desquelles la chaux s'hydrate, le mélange agité est chauffé jusque 90°C et maintenu à cette température durant 5 heures. Finalement, le produit est séché à 225°C à l'étuve pendant 5 à 6 heures. On obtient ainsi en substance une phase prétobermoritique ayant une humidité résiduelle de moins de 5%. On peut vérifier la structure prétobermoritique du produit par diffraction X (voir figures 1 et 2).

Il peut être nécessaire de granuler le produit séché. Il peut également être indiqué de compacter ledit produit.

Il existe un grand nombre de variantes du procédé de préparation décrit ci-dessous.

On peut ainsi

- partir d'une suspension de silice plus diluée, ou plus concentrée,
- partir d'une température plus élevée ou plus basse que 25°C,
- utiliser de la chaux plus grossière, constituée, par exemple, de particules ayant un diamètre inférieur à 5 mm,
- utiliser de la chaux hydratée ou du lait de chaux,
- faire une synthèse avec des teneurs en matières sèches plus basses (par exemple 5%) ou plus élevées (par exemple 50%),
- atteindre la température de 90°C avant l'ajout de chaux,
- modifier la température de synthèse de 90°C vers le haut ou vers le bas (par exemple, une température de 70°C permet également d'obtenir un bon produit),
- effectuer le séchage à diverses températures, par exemple, 100 °C et même moins , ou encore 400°C,
- utiliser tout type de sécheur,
- ne pas sécher le produit.

Vu que les proportions molaires Si/Ca dans le produit final correspondent aux proportions molaires dans le mélange de départ, les procédés décrits ci-dessus permettent facilement de faire varier les proportions molaires de Si/Ca dans l'agent de captation.

L'agent de captation et les procédés de traitement de gaz suivant l'invention présentent un grand nombre d'avantages.

Contrairement aux agents de captation solides connus, l'agent de captation suivant l'invention présente l'avantage de maintenir une activité effective jusqu'à ce qu'en substance tout le calcium présent dans la phase active ait réagi, même avec une phase active ayant par exemple une épaisseur de 8 mm.

Ainsi, grâce à l'invention, il est devenu inutile de prévoir une étape de recyclage d'agent de captation telle que proposée dans US 4,804,521, US 5,100,643 et US 5,401,481.Une telle étape augmentait considérablement le coût de mise en oeuvre du procédé de traitement du gaz.

Une phase prétobermoritique se prête aisément à une opération de granulation.

Un avantage de l'agent de captation suivant l'invention est que même s'il consiste entièrement en une phase prétobermoritique, les particules ou granules ne deviennent pas pâteux et ne collent pas ensemble même avec des gaz ayant une humidité relative de 70%, et même après la captation par exemple de $SO_2$ et/ou d'HCl jusqu'à saturation. Les particules ou granules peuvent ainsi être facilement disposées en lit fixe, facilement évacuées du lit après le traitement des gaz et également aisément évacuées de tout type de filtre, comme par exemple un filtre à manches.

Dans le procédé à lit fixe, le lit garde son intégrité et sa porosité, c'est-à-dire que le lit ne devient pas plus compact durant le traitement des gaz. Même après désactivation de l'agent de captation, la perte de charge n'augmente pas ou en tous cas n'augmente pas de manière significative.

Les avantages de l'agent de captation suivant l'invention mentionnés ci-dessus permettent son utilisation dans une plus grande variété d'applications que les agents de captation connus de l'état de la technique.

En effet, les traitements de gaz par voie humide connus, s'ils permettent de faire réagir la quasi-totalité du calcium présent dans l'agent, ne sont en pratique utilisés que pour des installations à grands débits de gaz.

Le traitement de gaz par la voie semi-humide ne permet pas de faire réagir entièrement le calcium présent dans l'agent avec le ou les gaz acides à capter. Par conséquent, un traitement de gaz fiable ne peut être assuré qu'en utilisant un surplus d'agent de captation connu.

Le traitement de gaz par voie semi-humide suivant l'état de la technique est également mal approprié pour le traitement des effluents gazeux à débit réduit ou variable.

Vu l'activité de l'agent de captation suivant l'invention (réaction totale du calcium) et son utilité pour le traitement en lit fixe, la présente invention permet de manière simple et fiable de traiter des gaz contenant des composés acides, même quand ces gaz ou ces composés ont un débit réduit et/ou variable.

L'invention permet d'exécuter le traitement de gaz à des conditions optimales de captation (humidité relative élevée) sans risque d'obtenir un produit solide pâteux et/ou collant.

L'invention permet de traiter des gaz avec un minimum d'agent de captation. Grâce à la haute teneur en composés acides neutralisés dans l'agent de captation épuisé, l'invention permet de traiter les gaz avec une faible quantité de solides à mettre en décharge, particulièrement quand les gaz acides à traiter contiennent essentiellement du $SO_2$ à capter.

Il est particulièrement remarquable qu'avec les agents de captation suivant l'invention qui consistent en leur totalité en la phase active, et en particulier quand le rapport molaire Si/Ca est en dessous de 0,65, il est possible d'obtenir une réaction quasi-totale du calcium (même lorsque le principal gaz à capter est le $SO_2$) avec les composés acides présents dans les gaz, tout en ayant une masse réduite de résidus solides après réaction.

Il est connu, entre autres par l'ouvrage "The CHEMISTRY of CEMENTS", page 172, que les silicates de calcium hydratés, et particulièrement dans des conditions humides, sont susceptibles de réagir avec le $CO_2$ présent dans les gaz avec formation de $CaCO_3$ et de silice amorphe. Une telle réaction entre le calcium et le $CO_2$ est désavantageuse dans le traitement des gaz parce qu'elle limite, par sa consommation du calcium de la phase active, la capacité de celle-ci à capter des composés acides, tels que $SO_2$, $SO_3$, HCl, HBr et HF.

Il a maintenant été découvert de manière surprenante que l'agent de captation suivant la présente invention capte le $SO_2$ et les autres composés acides mentionnés ci-dessus, de manière sélective par rapport au $CO_2$.

Une diminution de la température des gaz à traiter sans modifier l'humidité absolue entraîne une élévation de la captation du $SO_2$ et des autres composés acides sans que la captation du $CO_2$ n'augmente.

Les agents de captation suivant l'invention qui consistent dans leur totalité en la phase active, et en particulier quand le rapport molaire est Si/Ca = 1, maintiennent une activité appréciable jusqu'à ce que tout le calcium ait réagi.

Dans le cas d'un agent de captation consistant entièrement en une phase prétobermoritique, on peut ainsi retrouver quasiment 15% en poids de soufre, maximum théorique, dans le résidu final, avec des gaz à désulfurer à 65°C et une humidité relative de 70%. On a observé que, dans les mêmes conditions, en baissant le rapport molaire Si/Ca, la captation de $SO_2$ reste aussi bonne jusqu'à des rapports molaires Si/Ca aussi bas que 0,5 et même 0,2.

Un aspect important de tout procédé qui entraîne la formation de déchets solides est la masse à mettre en décharge. Grâce à l'activité et à la sélectivité élevée de l'agent de captation suivant l'invention en combinaison avec son contenu limité en silicium, les procédés de traitement suivant l'invention entraînent un minimum de solides à mettre en décharge, en particulier quand l'agent de captation consiste en la phase active et que le procédé de traitement est sec.

Ceci constitue un aspect particulièrement important de l'invention, à la fois économique et environnemental.

Certains avantages de la présente invention sont illustrés par les exemples d'application suivants.

Un lit fixe d'agent de captation est préparé en versant l'agent de captation granulaire dans un tube cylindrique ayant un diamètre de 24 mm. Dans le tube, le lit fixe est précédé et suivi d'une couche inerte, ce qui assure une distribution homogène des gaz à l'entrée du lit fixe et évite la perte d'agent de captation à la sortie du lit. On règle le débit, la température et la composition des gaz à l'entrée du lit fixe (y compris l'humidité) et on mesure la composition des gaz à la sortie du lit fixe. Trois agents de captation différents sont testés.

1) Un $Ca(OH)_2$ ayant une surface spécifique BET de 57 $m^2/g$, et un volume poreux de 0,27 $cm^3/g$ mesuré par la méthode BJH dans l'hypothèse de pores cylindriques, 50% dudit volume poreux étant occupé par des pores ayant un diamètre compris entre 100 et 400 Å.

2) La xonotlite (silicate de calcium hydraté cristallin)de formule $(CaO)_6.(SiO_2)_6.H_2O$ avec une surface spécifique BET de 25 $m^2/g$ et un volume poreux de 0,10 $cm^3/g$.

3) L'agent de captation suivant l'invention, consistant entièrement en une phase prétobermoritique ayant une surface specifique BET de 120 m$^2$/g et un volume poreux de 1,1 cm$^3$/g, le rapport molaire Si/Ca dans la phase prétobermoritique étant 0,52.

Dans chaque essai, l'agent de captation est présent sous forme de granules ayant un diamètre entre 0,5 et 1 mm.

Le gaz à l'entrée des lits fixes est un mélange d'air sec, de $SO_2$ (0,15 %V), $CO_2$ (8 %V) et de $H_2O$. Quand la température du gaz à l'entrée du lit est de 65°C, son humidité relative est de 66%. Quand la température des gaz à l'entrée du lit est de 85°C, son humidité relative est de 29%.

On fait passer les gaz à travers les lits fixes respectifs jusqu'à inactivité du lit, c'est-à-dire jusqu'à identité entre la composition des gaz à l'entrée et à la sortie du lit fixe.

Le lit fixe est alors vidé et le résidu de l'agent de captation est analysé. Les résultats à 65°C et à 85°C sont présentés respectivement dans les tableaux 1 et 2.

Tableau 1

| Agent de captation | Ca(OH)$_2$ | Xonotlite | Phase suivant l'invention |
|---|---|---|---|
| Température du gaz à l'entrée du lit | 65°C | | |
| % molaire du Ca présent dans l'agent lié au soufre après le traitement | 51 | 86 | 95 |
| % molaire du Ca dans l'agent lié au carbone après le traitement | 10 | 2 | 4 |
| % molaire du Ca dans l'agent n'ayant pas réagi durant le traitement | 39 | 12 | 1 |
| kg d'agent nécessaire pour capter 1 kg de soufre | 4,22 | 4,46 | 3,18 |

Tableau 2

| Agent de captation | Ca(OH)$_2$ | xonotlite | Phase suivant l'invention |
|---|---|---|---|
| Température du gaz à l'entrée du lit | 85°C | | |
| % molaire du Ca dans l'agent lié au soufre après le traitement | 32 | 51 | 86 |
| % molaire du Ca dans l'agent lié au carbone après le traitement | 12 | 3 | 4 |
| % molaire du Ca dans l'agent qui n'a pas réagi durant le traitement | 56 | 46 | 10 |
| kg d'agent nécessaire pour capter 1 kg de soufre | 6,80 | 7,97 | 3,59 |

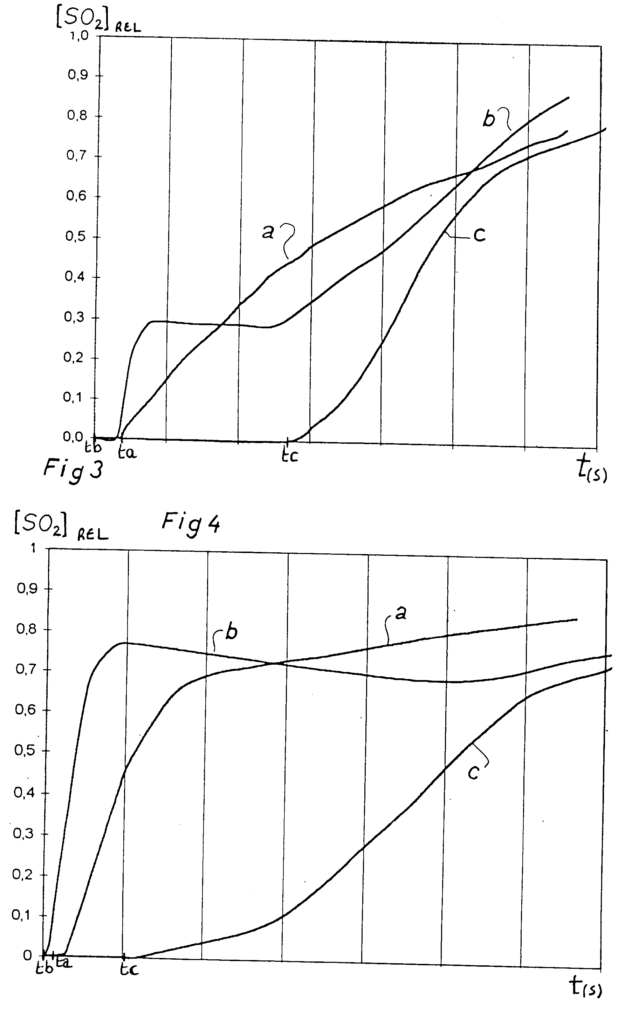

Les figures 3 et 4 représentent l'évolution dans le temps de la concentration relative en $SO_2$ ($[SO_2]_{REL}$) dans le gaz à la sortie d'un lit fixe des 3 agents de captation susmentionnés, la concentration relative étant le rapport entre la concentration en $SO_2$ mesuré à la sortie du lit fixe et la concentration en $SO_2$ des gaz à l'entrée du lit fixe. La figure 3 représente les résultats obtenus quand la température du gaz à l'entrée du lit fixe est 65°C et la figure 4, ceux obtenus avec une température du gaz de 85°C.

Les matériaux, les conditions expérimentales et l'installation étaient tels que décrits ci-dessus.

La quantité de sorbant dans le lit fixe de cet agent était chaque fois de 10g.

Les courbes "a" représentent les résultats obtenus avec un lit fixe de Ca(OH)$_2$.

Les courbes "b" représentent les résultats obtenus avec un lit fixe de xonotlite.

Les courbes "c" représentent les résultats obtenus avec un lit fixe d'agent de captation suivant l'invention.

On constate (courbes a) que le Ca(OH)$_2$ permet un abattement total, c'est-à-dire une élimination complète du $SO_2$ du gaz pendant une période limitée allant jusqu'à un temps ta.

La xonotlite (courbes b) ne permet un abattement total du gaz que pendant une période allant jusqu'au temps tb (< ta).

La phase prétobermoritique suivant l'invention (courbes c) permet un abattement total du gaz pendant une période s'étendant jusqu'au temps **tc** (>**ta** >**tb**).

On observe que l'agent de captation suivant l'invention capte généralement plus de $SO_2$ que les deux agents de captation suivant l'état de la technique.

L'élimination de $SO_2$ est à tout moment plus importante qu'avec les agents de captation de l'état de la technique.

Le but du traitement de gaz est généralement de limiter à un minimum inférieur aux normes en vigueur, (par exemple, 25% de la concentration initiale en composés acides) la concentration des composés acides dans les effluents gazeux. Il est à noter que l'agent de captation suivant l'invention est particulièrement avantageux dans de telles circonstances.

La présente invention peut être avantageusement utilisée pour le traitement des effluents gazeux

- des installations d'incinération d'ordures ménagères, de déchets industriels et de déchets de toute autre nature,
- des centrales thermiques (au charbon, au mazout, au lignite ou fonctionnant avec tout autre combustible susceptible de générer des gaz contenant des composés acides),
- des fours de verrerie,
- de toute installation de l'industrie céramique susceptible de générer des gaz contenant des composés acides comme le four d'une briquetterie,
- et de toute autre installation susceptible de générer des fumées contenant des composés acides (Hcl,$SO_2$, $SO_3$, HF, HBr).

**Revendications**

1. Agent de captation pour le traitement de gaz, ayant une phase active qui consiste en substance en un silicate de calcium hydraté caractérisé en ce que le silicate de calcium hydraté est présent sous forme d'une phase prétobermoritique.

2. Agent suivant la revendication 1, caractérisé en ce que le rapport molaire Si/Ca dans la phase prétobermoritique est $0,2 \leq Si/Ca \leq 1$.

3. Agent suivant la revendication 2, caractérisé en ce que le rapport molaire Si/Ca dans la phase prétobermoritique est $0,2 \leq Si/Ca \leq 0,65$.

4. Agent suivant la revendication 3, caractérisé en ce que le rapport molaire Si/Ca dans la phase prétobermoritique est $0,40 \leq Si/Ca \leq 0,65$.

5. Agent suivant l'une quelconque des revendications précédentes, caractérisé en ce que le rapport molaire $H_2O$/Ca dans la phase prétobermoritique est

$$0,1 \leq \frac{H_2O}{Ca} \leq 2,$$

$H_2O$ étant l'eau restant dans la phase prétobermoritique après séchage à l'étuve à 105°C jusqu'à poids constant.

6. Agent suivant la revendication 5, caractérisé en ce que le rapport molaire $H_2O$/Ca dans la phase prétobermoritique est

$$0,1 \leq \frac{H_2O}{Ca} \leq 1$$

7. Agent suivant la revendication 6, caractérisé en ce que le rapport molaire $H_2O$/Ca dans la phase prétobermoritique est

$$0,25 \leq \frac{H_2O}{Ca} \leq 1$$

8. Agent suivant l'une quelconque des revendications précédentes, caractérisé en ce qu'il est présent sous forme de granules ayant en substance un diamètre entre 0,5 et 30 mm.

9. Agent suivant la revendication 8, caractérisé en ce que le diamètre des granules se situe en substance entre 1 et 16 mm.

10. Agent suivant la revendication 9, caractérisé en ce que le diamètre des granules se situe en substance entre 1 et 8 mm.

11. Agent suivant l'une quelconque des revendications précédentes, caractérisé en ce que l'agent consiste en la phase active.

12. Procédé de traitement de gaz au moyen d'un agent de captation, caractérisé en ce que l'on utilise un agent de captation suivant l'une quelconque des revendications précédentes.

13. Procédé suivant la revendication 12, caractérisé en ce qu'il consiste en un procédé sec, dans lequel les gaz sont mis en contact direct avec l'agent de captation.

14. Procédé suivant la revendication 13, caractérisé en ce que l'on passe les gaz à traiter à travers au moins un lit fixe contenant l'agent de captation.

15. Procédé suivant la revendication 14, caractérisé en ce que l'agent de captation est un agent de captation suivant l'une quelconque des revendications 8, 9, 10 et 11.

16. Procédé suivant l'une des revendications 14 et 15, caractérisé en ce que les gaz ont une température de 40 à 450°C.

17. Procédé suivant la revendication 16, caractérisé en ce que la température des gaz se situe entre 60 et 300°C, et de préférence de 60 et 150 °C et entre 65 et 85°C.

18. Procédé suivant l'une quelconque des revendications 16 et 17, caractérisé en ce que l'humidité relative des gaz se situe entre 3 et 100%, et de préférence entre 30 et 100 %.

19. Procédé suivant l'une quelconque des revendications 14 à 18, caractérisé en ce qu'on mesure la concentration d'au moins un composé acide, dit "composé indicateur", dans les gaz à la sortie du lit fixe et qu'on remplace l'agent de captation du lit fixe quand la concentration dépasse une valeur limite fixée.

20. Procédé suivant la revendication 19, caractérisé en ce que le composé indicateur est le $SO_2$.

21. Procédé suivant l'une quelconque des revendications 14 à 20, caractérisé en ce qu'on utilise deux lits fixes contenant l'agent de captation en parallèle, les gaz à traiter passent à travers un des deux lits fixes jusqu'à ce que la concentration en composé indicateur dans les gaz à la sortie du lit fixe atteigne la valeur limite, après quoi les gaz à traiter sont dirigés vers le deuxième lit fixe et on remplace l'agent de captation du premier lit fixe par une nouvelle charge d'agent de captation.

22. Procédé suivant l'une des revendications 14 à 21, caractérisé en ce qu'on utilise deux lits fixes contenant l'agent de captation en série, et qu'on mesure la concentration en composé indicateur dans les gaz à la sortie du lit en aval, qu'on remplace l'agent de captation du lit en amont par l'agent de captation du lit en aval, et qu'on remplace l'agent de captation du lit en aval par une nouvelle charge d'agent de captation quand la concentration en composé indicateur atteint la valeur limite.

23. Dispositif pour le traitement de gaz, comportant un ou plusieurs lits fixes contenant un agent de captation suivant l'une quelconque des revendications 1 à 11, le dispositif étant apte à être inséré dans un passage de gaz de manière à forcer les gaz à passer à travers le lit fixe ou à travers au moins un des lits fixes.

24. Dispositif suivant la revendication 23, caractérisé en ce qu'il comporte un système de détection apte à détecter la présence d'un ou plusieurs composés acides choisis parmi $SO_2$, $SO_3$, HCl, HBr et HF dans les gaz après passage à travers le ou les lits fixes.

Fig 1

Fig 2

Fig 3

Fig 4

**Office européen des brevets**

# RAPPORT DE RECHERCHE EUROPEENNE

Numéro de la demande

EP 98 20 0202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X,D | H.F.. TAYLOR: "The Chemistry of Cements" 1994 , ACADEMIC PRESS , LONDON AND NEW YORK XP002069147 * page 167 - page 231 * * page 287 - page 309 * --- | 1-11 | B01D53/50 B01D53/68 B01D53/40 |
| A,D | US 5 401 481 A (GARY T. ROCHELLE ET AL) 28 mars 1995 * le document en entier * ----- | 1-24 | |

DOMAINES TECHNIQUES RECHERCHES (Int.Cl.6)

B01D

Le présent rapport a été établi pour toutes les revendications

| Lieu de la recherche | Date d'achèvement de la recherche | Examinateur |
|---|---|---|
| LA HAYE | 24 juin 1998 | Bogaerts, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)